**Europäisches Patentamt**

**European Patent Office**

**Office européen des brevets**

(11) Veröffentlichungsnummer: **0 159 080**

**B1**

(12) **EUROPÄISCHE PATENTSCHRIFT**

(45) Veröffentlichungstag der Patentschrift:
02.09.87

(51) Int. Cl.⁴: **F 16 D 23/04**

(21) Anmeldenummer: **85200488.6**

(22) Anmeldetag: **30.03.85**

(54) Verfahren zur Herstellung eines Synchronringes.

(30) Priorität: **05.04.84 DE 3412779**

(43) Veröffentlichungstag der Anmeldung:
**23.10.85 Patentblatt 85/43**

(45) Bekanntmachung des Hinweises auf die Patenterteilung:
**02.09.87 Patentblatt 87/36**

(84) Benannte Vertragsstaaten:
**AT DE FR GB IT NL SE**

(56) Entgegenhaltungen:
**EP-A-0 070 952**
**DE-A-1 652 862**
**DE-A-1 815 372**
**DE-A-2 055 345**
**DE-A-2 722 103**
**DE-A-3 327 657**
**DE-B-1 154 643**
**DE-B-1 205 285**
**FR-A-1 250 284**
**FR-A-1 284 323**
**FR-A-1 460 313**
**FR-A-1 521 621**
**FR-A-1 535 343**
**FR-A-1 574 437**
**FR-A-2 315 325**
**FR-A-2 323 063**
**GB-A-945 445**
**US-A-2 354 526**

(73) Patentinhaber: **KOLBENSCHMIDT Aktiengesellschaft, Christian- Schmidt- Strasse 8/12 Postfach 1351, D-7107 Neckarsulm (DE)**

(72) Erfinder: **Creydt, Martin, Dr., Breslauer Strasse 27, D-6809 Wiesloch (DE)**
Erfinder: **Bickle, Wolfgang, Friedensstrasse 13, D-6838 Reilingen (DE)**
Erfinder: **Pfestorf, Harald, Panoramastrasse 18/1, D-7107 Untereisesheim (DE)**

(74) Vertreter: **Rieger, Harald, Dr., Reuterweg 14, D-6000 Frankfurt am Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft ein Verfahren zur Herstellung eines Synchronringes aus einem Verbundwerkstoff, wobei die den Reibkegel bildende metallische Schicht stoffschlüssig mit einer aus einem anderen Werkstoff gebildeten Stützschicht verbunden ist.

Als Werkstoff für Einmetall-Synchronringe haben sich Sondermessinge vom Typ CuZn40A12 nach DIN 17660 seit langem bewährt, weil sich diese Werkstoffe durch eine gute Kombination von Reibbeiwert, Verschleißwiderstand und mechanischer Festigkeit auszeichnen. Für mechanisch stärker belastete Synchronringe werden Sondermessinge mit Gehalten an Mangan, Aluminium, Eisen, Silizium, Nickel, Zinn und/oder Blei eingesetzt (DE-B 11 54 643, DE-B 12 05 285, ATZ Automobil-Technische Zeitschrift 58, 5 (1981), S. 1-4, Frankh'sche Verlagshandlung Stuttgart). Der geforderte Verschleißwiderstand dieser mechanisch höher belastbaren Synchronringe wird durch eine aufgetragene Molybdänbeschichtung erreicht. Neben den Sondermessingen werden noch aus Aluminium-Bronze, Silizium-Mangan-Bronze und Phosphor-Bronze gegossene oder geschmiedete Synchronringe für Sonderfälle verwendet. Bei aus Stahl oder Eisen bestehenden Synchronringen ist es ebenfalls erforderlich, eine Molybdän- oder Kohlenstoff-Mangan-Stahl-Spritzschicht aufzutragen. Bekannt geworden sind auch aus einer Aluminiumlegierung des Typs AlSil2 abgeleitete Synchronringe für relativ niedrig belastete Schaltgetriebe von Kleinkraftfahrzeugen.

Der unbeschichtete Synchronring aus CuZn40A12 erfüllt hinsichtlich Anwendung und Fertigung auch heute noch in den meisten Fällen alle an Synchronringe gestellten Forderungen. Andererseits gibt es zahlreiche Werkstoffe, die einzelne Forderungen weit besser erfüllen als die bekannten Sondermessinge. Es hat deshalb nicht an Vorschlägen gefehlt, u. a. auch Verbundwerkstoffe für die Fertigung von Synchronringen einzusetzen. So ist beispielsweise in der DE-B 16 52 862 ein Synchronring vorgesehen, bei dem ein aus weichem Stahl bestehender, reibkegelseitig angeordneter, Innenring mit einem aus einer Bronze-Legierung gebildeten Außenring mechanisch verbunden ist. Gegebenenfalls kann der Innenring auch aus Kunststoff bestehen. Aus der FR-A-2 323 063 ist eine Synchronisierungseinrichtung bekannt, bei der die Reibfläche der durch Tiefziehen oder Prägen erzeugten Synchronringe aus einer aufgesprühten Molybdänschicht besteht und auf die Molybdänschicht des Außensynchronrings eine Schicht aus manganhaltigem Kohlenstoffstahl aufgesprüht ist. Neben den hohen Fertigungskosten ist die Lebensdauer solcher Synchronringe, gemessen an der Lebensdauer moderner Brennkraftmaschinen, zu gering.

Als Folge von Umweltschutzauflagen und Energieeinsparung geht das Bestreben heute dahin, die Leistungsausbeute von Brennkraftmaschinen zu erhöhen und ihr Gewicht zu vermindern. Die Leistungssteigerung führt jedoch zu einer Erhöhung von Drehmoment und Drehzahl, so daß erhöhte Synchronisierkräfte und Gleitgeschwindigkeiten auf die Schaltgetriebe wirken. Da auch das Gewicht der Kraftfahrzeuge und das Volumen des Schaltgetriebes verkleinert werden, wird die spezifische Belastung und ingesamt dadurch auch die spezifische Belastung der Synchronringe vergrößert.

In Erwartung einer der Brennkraftmaschine bzw. dem Kraftfahrzeug angepaßten Lebensdauer und einer großen Zuverlässigkeit werden vom Synchronring über lange Zeit gleichbleibende Eigenschaften, insbesondere bezüglich Reibbeiwert, Verschleißwiderstand und mechanischer Festigkeit gefordert. Darüber hinaus soll der Synchronring aus kostengünstigen Werkstoffen bestehen und seine Fertigung ohne besonderen Aufwand möglich sein.

Diese Aufgabe wird erfindungsgemäß dadurch gelöst, daß aus einem Verbundwerkstoff aus Stahlband-Aluminiumlegierungsband Formronden ausgestanzt und diese spanlos, beispielsweise durch Prägen, Tiefziehen oder dergl., zu Synchronringen verformt werden.

Zweckmäßigerweise werden bei der spanlosen Formgebung gleichzeitig die axialen Vertiefungen für den Ölablauf sowie die Gewinderillen am Reibkegel, die Führungselemente für die Gleitsteine sowie bei Innensynchronringen der Zahnkranz spanlos geformt. Die Ölablaufvertiefungen werden so geformt, daß sie gleichzeitig zur Versteifung der Stützschicht dienen.

Die Herstellung eines solchen Verbundwerkstoffes ist in der DE-A-3 327 657 beschrieben. Dabei werden ein 0,5 bis 5 mm dickes, aus einer aushärtbaren, bei Temperaturen von 450 bis 550 °C für die Dauer von 0,5 bis 3 Stunden homogenisierten und anschließend abgeschreckten Aluminiumlegierung bestehendes Band und ein 0,5 bis 10 mm dickes Stahlband mit einer Geschwindigkeit von 1,5 bis 5 m/min bei einer Plattiertemperatur von 200 bis 450 °C walzplattiert und der Verbundwerkstoff unmittelbar bei Austritt aus dem Walzspalt abgeschreckt. Nach dem spanlosen Verformen der aus dem Verbundwerkstoff erzeugten Synchronringe betragen die Dicke der Reibschicht 0,1 bis 1,0 mm und die Dicke der Stützschicht von 0,5 bis 3,5 mm.

Gegebenenfalls ist es auch möglich die Aluminium-Legierung auf das Stahlband aufzugießen.

Zwar ist aus der GB-A-1 073 410 ein Synchronring bekannt, bei dem die Reibschicht aus einem Nichteisenmetall besteht. Es gibt jedoch keinen Hinweis darauf, daß als Nichteisenmetall eine stoffschlüssig mit Stahl verbundene Aluminiumlegierung in Betracht kommt.

Die erfindungsgemäß gestalteten Synchronringe sind in den nachfolgend näher erläuterten Zeichnungen beispielhaft dargestellt.

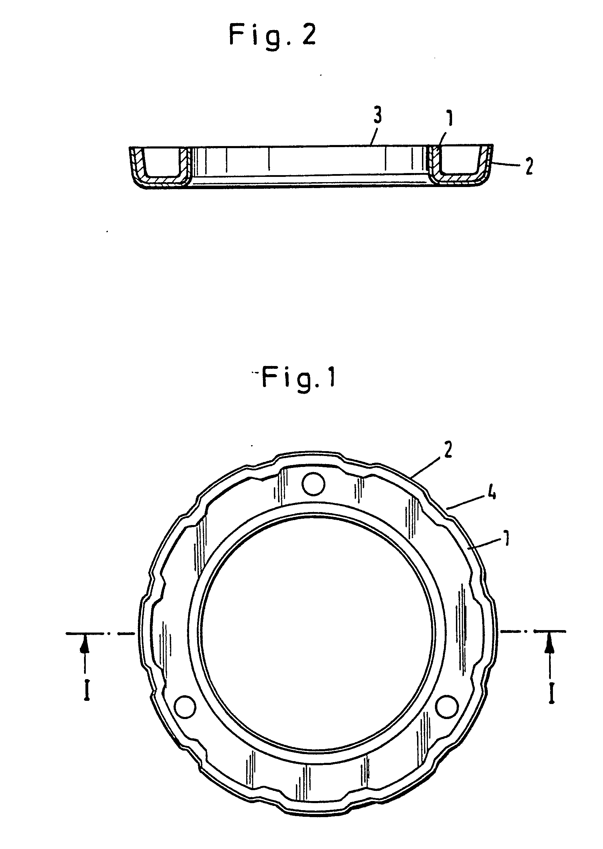

Fig. 1 zeigt in Draufsicht einen aus einer aus einem durch Walzplattieren eines Stahlbandes 1 mit einem Band 2 aus einer Aluminiumlegierung des Typs AlSil2CuNiMg hergestellten Verbundwerkstoff ausgestanzten Formronde, die durch Tiefziehen zu einem Außensynchronring 3 geformt wurde. In der den Reibkegel bildenden Aluminiumlegierungsschicht befinden sich die spanlos hergestellten axial verlaufenden Ölablaufkanäle 4. In Fig. 2 ist ein Querschnitt entlang der Schnittlinie I-I der Fig. 1 wiedergegeben.

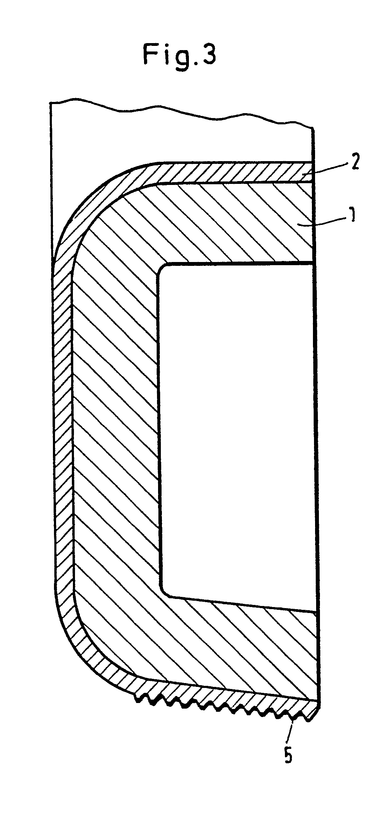

In Fig. 3 ist eine vergrößerte Darstellung des einen Schnittbereichs der Schnittlinie I-I der Fig. 1 dargestellt, so daß die spanlos erzeugten radial verlaufenden Gewinderillen 5 des Reibkegels erkennbar sind.

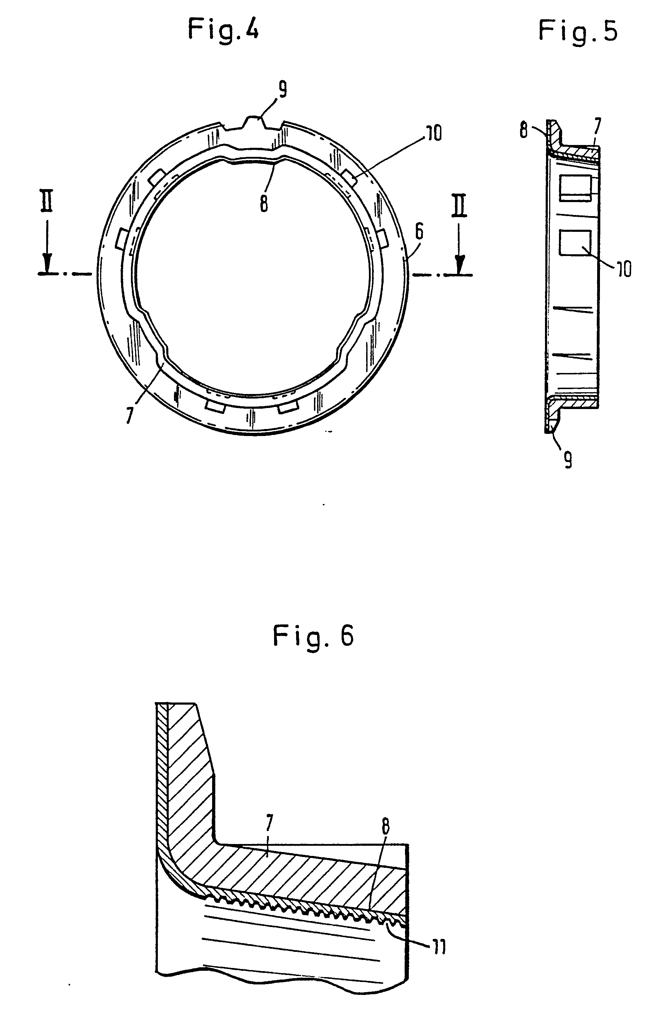

In Fig. 4 ist in Draufsicht ein Innensynchronring 6 dargestellt, der aus einer aus einem durch Walzplattieren gefertigten Verbundwerkstoff, bestehend aus einer Stahlschicht 7 und einer Schicht 8 aus einer Aluminiumlegierung des Typs AlSi18CuNiMg, ausgestanzten Formronde durch Prägen hergestellt wurde. Fig. 5 zeigt einen Schnitt entlang der Schnittlinie II-II der Fig. 4. Der Zahnkranz 9 und die Führungselemente 10 für die Gleitsteine sind spanlos geformt. Fig. 6 zeigt eine vergrößerte Darstellung des einen Schnittbereichs der Schnittlinie II-II der Fig. 4 mit in der Aluminiumlegierungsschicht 8 angebrachten Gewinderillen 11.

Die mit der Erfindung erzielten Vorteile bestehen insbesondere in der Kombination der ausgezeichneten Reib- und Verschleißeigenschaften der Aluminiumlegierung mit den hohen mechanischen Festigkeiten der Stützschicht.

## Patentansprüche

1. Verfahren zur Herstellung eines Synchronringes aus einem Verbundwerkstoff, wobei die den Reibkegel bildende metallische Schicht stoffschlüssig mit einer aus einem anderen Werkstoff gebildeten Stützschicht verbunden ist, dadurch gekennzeichnet, daß aus einem Verbundwerkstoff aus Stahlband-Aluminiumlegierungsband Formronden ausgestanzt und diese spanlos zu Synchronringen verformt werden.

2. Verfahren nach Anspruch 1, dadurch gekennzeichnet, daß gleichzeitig mit der spanlosen Formgebung die axialen Vertiefungen für den Ölablauf, die Gewinderillen am Reibkegel, die Führungselemente für die Gleitsteine und bei Innensynchronringen der Zahnkranz, spanlos geformt werden.

3. Verfahren nach den Ansprüchen 1 und 2, dadurch gekennzeichnet, daß die axial verlaufenden Ölablaufvertiefungen so geformt werden, daß sie gleichzeitig zur Versteifung der metallischen Stützschicht dienen.

## Claims

1. A process of manufacture a synchronizing ring consisting of a composite material, wherein a metallic layer which constitutes the friction cone is cladded to a backing layer made of a different material, characterized in that blanks are blanked from the composite material of a strip of steel with an aluminum alloy and synchronizing rings are made from said blanks by non-cutting shaping.

2. A process according to claim 1, characterized in that the axial recesses for draining oil and the thread grooves on the friction cones, the guiding elements for the sliding members and in inner synchronizing rings the gear ring are formed by non-cutting shaping.

3. A process according to claim 2, characterized in that the axial recesses for a draining of oil are made by non-cutting shaping in such a manner that they serve also to stiffen the metallic backing layer.

## Revendications

1. Procédé de fabrication d'une bague de synchroniseur en un matériau composite, la couche métallique formant le cône de friction étant reliée par coopération de matière à une couche d'appui en un autre matériau, caractérisé en ce qu'il consiste à découper des flans circulaires dans un matériau composite constitué d'un ruban d'acier et d'un ruban en alliage d'aluminium et à conformer ceux-ci sans enlèvement de copeaux en des bagues de synchroniseur.

2. Procédé suivant la revendication 1, caractérisé en ce qu'il consiste à former, sans enlèvement de copeaux, en même temps que le formage sans enlèvement de copeaux, les cavités axiales pour l'évacuation de l'huile, les gorges à filet sur le cône à friction, les éléments de guidage des coulisseaux et, dans le cas de bagues intérieures de synchroniseur, la couronne dentée.

3. Procédé suivant les revendications 1 et 2, caractérisé en ce qu'il consiste à former les cavités pour l'évacuation de l'huile qui s'étendent axialement, de manière qu'elles servent en même temps à renforcer la couche métallique d'appui.

# Fig. 2

# Fig. 1

# Fig.3

# Fig.4

# Fig.5

# Fig. 6